# FASCICULE DE BREVET EUROPEEN

(11) **EP 1 353 800 B1**
(45) Date de publication et mention de la délivrance du brevet: **07.06.2006**
(21) Numéro de dépôt: 01272030.6
(22) Date de dépôt: 18.12.2001
(51) Int. Cl.: B32B 27/32, B32B 27/28, B32B 7/12

(54) **STRUCTURES A COUCHES POLYMERIQUES MULTIPLES**
STRUKTUREN MIT MEHREREN POLYMERLAGEN
STRUCTURES WITH MULTIPLE POLYMERIC LAYERS

(30) Priorité: 22.12.2000 FR 0017253
(43) Date de publication de la demande: 22.10.2003
(73) Titulaire: SOLVAY (Société Anonyme), 1050 Bruxelles (BE)
(72) Inventeur: BODART, Vincent, B-5001 Namur (BE); OREINS, Jean-Marie, B-2840 Haacht (BE); LAURENT, Guy, B-5020 Vedrin (BE); DECLERCK, Fredy, B-1020 Bruxelles (BE); MALINOVA, Alexandra, 1726 Farvagny (CH); TORRES, Nadia, F-34140 MEZE (FR); BOUTEVIN, Bernard, F-34090 MONTPELLIER (FR)
(74) Mandataire: Jacques, Philippe
(86) Numéro de dépôt international: PCT/EP2001/015037
(87) Numéro de publication internationale: WO 2002/051633

(56) Documents cités:
- EP-A- 0 239 685
- EP-A- 0 296 042
- EP-A- 0 976 804
- GB-A- 962 575
- GB-A- 1 101 983
- US-A- 4 810 754
- US-A- 4 959 271

## Description

La présente invention concerne des structures à couches polymériques multiples, un procédé pour leur préparation ainsi que leur utilisation.

Les polymères d'hydrocarbures halogénés, et plus particulièrement les polymères d'hydrocarbure fluorés, sont des polymères qui présentent un ensemble de propriétés intéressantes et, notamment, une imperméabilité aux liquides et aux gaz, une inertie chimique élevée et une excellente tenue au vieillissement. De ce fait, ils trouvent des applications multiples dans des domaines très divers et, notamment, dans le transport et le stockage de liquides et de.gaz et dans la protection contre la corrosion. Néanmoins, ils présentent l'inconvénient d'être relativement coûteux, ce qui risque de limiter leurs débouchés.

Un moyen approprié pour réduire le coût des articles façonnés en ce type de polymères consiste à utiliser ces polymères sous la forme de structures à couches polymériques multiples (films, feuilles, plaques, tubes, corps creux, etc.) dans lesquelles ils sont associés à d'autres polymères, lesquels apportent, par ailleurs, leurs propres propriétés et avantages, tels que par exemple la résistance mécanique, l'aptitude au scellage, la résistance à la griffe, etc. Toutefois, les polymères d'hydrocarbures halogénés, et plus particulièrement les polymères d'hydrocarbures fluorés, sont connus pour être des matériaux difficiles à faire adhérer à d'autres polymères, notamment les polymères d'oléfines.

Pour résoudre ce problème, de nombreuses solutions ont été proposées et notamment d'interposer entre le polymère d'hydrocarbure halogéné et le polymère d'oléfine, deux couches d'adhésif.

Ainsi, le brevet EP-B1-206689 concerne un laminé comprenant au moins deux couches d'adhésif distinctes en contact constituées d'un polymère d'hydrocarbure fluoré modifié par un groupe carboxyle, anhydride d'acide, hydroxyle ou époxyde et d'un polymère d'oléfine modifié par un groupe carboxyle, anhydride d'acide, hydroxyle ou époxyde différent du précédent. Ces deux couches d'adhésif distinctes peuvent être placées sur une couche de substrat préparé à partir d'un matériau choisi parmi divers polymères dont le fluorure de polyvinylidène, le polyéthylène et le nylon. Ainsi, est cité un laminé à 4 couches comprenant une couche de polyfluorure de vinylidène liée à une couche de polyéthylène par l'intermédiaire de deux couches d'adhésif distinctes. Cette structure multicouche présente l'inconvénient d'être constituée de deux couches d'adhésif et donc au total de 4 couches, ce qui pose des problèmes techniques lors de la coextrusion au niveau industriel qui est plus facilement envisageable techniquement si elle est limitée à 3 couches, donc avec une seule couche d'adhésif.

En raison de leur moindre coût et des considérations techniques de fabrication décrites ci-dessus, les structures ayant une seule couche d'adhésif sont préférées à celles comprenant plus d'une couche d'adhésif.

Le document **EP-A-0 976 804** divulgue une structure multicouche comprenant une couche (A) à base de polymère thermoplastique fluorée liée à une couche (C) à base de polymère thermoplastique d'hydrocarbure non fluoré, de préférence une polyoléfine ou une polyamide, par l'intermédiaire d'une couche d'adhésif (B) comprenant, à la fois :
(a) un polymère thermoplastique d'hydrocarbure halogéné, de préférence un polymère de fluorure de vinylidène ;
(b) un copolymère de monomère monoéthylèniques porteurs d'une fonction carboxylate d'alkyle ; et
(c) un polymère d'alpha-oléfine modifié par incorporation d'un groupe fonctionnel choisi parmi un carboxyle, un anhydride d'acide, un hydroxyle et un époxyde.

Le document **US-A-4 959 271** divulgue une structure multicouche comprenant :
- une couche de support à base d'un polymère ou copolymère d'oléfine, de préférence à base de polypropylène;
- une couche de barrière, comprenant de préférence un polymère du chlorure de vinylidène (VDC);
- une couche adhésive comprenant un copolymère greffé préparée à partir d'un mélange d'un polymère préformé, en général un polymère d'oléfine avec un mélange de monomères polymérisables choisis parmi le VDC et les méthacrylates d'alkyle en C₁-C₈.

Le document **EP-A-0 239 685** divulgue une structure multicouche comprenant une couche de polypropylène, une couche adhésive et une couche d'une résine barrière, la résine ayant les propriétés barrière étant une résine d'hydrocarbure chloré, de préférence un copolymère du VDC et la couche adhésive comprenant une résine de polypropylène greffée avec des résidus de méthacrylate d'alkyle, obtenue par greffage en présence d'un amorceur radicalaire.

Le document **GB-A-962 575** décrit un assemblage d'une couche d'un polyéster linéaire avec des objets en matériau polymère ou non-polymère, dans lesquels on améliore l'adhésion entre les composant en effectuant un greffage pour générer des groupements fonctionnels sur la surface du polyéster, ledit greffage impliquant une étape d'activation par ozonisation dudit polyéster.

Le document **GB-A-1 101 983** décrit des copolymères greffés préparés par réaction d'un polymère de type acrylique, en présence d'un amorceur radicalaire.

Le document **US-A-4 810 754** décrit la copolymérisation par greffage d'un monomère vinylique avec un copolymère de l'éthylène avec une alpha-oléfine en C₃-C₂₈, à l'état fondu en présence d'un amorceur radicalaire.

Le document **EP-A-0 296 042** décrit des couches adhésives pouvant être utilisées en tant que couche intercalaire dans les vitrages de sécurité, qui possède des bonnes propriétés d'adhésion avec les feuilles de verre et/ou de matière plastique. Ladite couche adhésive est une couche en matière plastique choisie parmi le polyuréthane (PU), le chlorure de polyvinyle (PVC), le polyvinylbutiral (PVB), qui comporte, greffés radiochimiquement sur au moins une des surfaces, des monomères et/ou des oligomères d'un monomère insaturé ou de sels de ce monomère.

Donc le problème qui subsiste est de fournir des structures à couches polymériques multiples faisant intervenir un adhésif qui peut se lier de manière satisfaisante à une couche de polymère d'hydrocarbure fluoré d'un côté et à une couche de polymère d'oléfine de l'autre côté en vue de former des structures à couches polymériques multiples ne contenant qu'une seule couche d'adhésif.

Afin de remédier aux inconvénients précités, la présente invention a pour objet de fournir des structures à couches polymériques multiples comprenant une couche (A) en polymère d'hydrocarbure fluoré liée à une couche (C) en polymère d'oléfine par l'intermédiaire d'une seule couche (B) à base d'un adhésif polymérique qui permette à ces structures d'allier une bonne adhésion à de bonnes propriétés barrière et à un coût pas trop élevé, d'être facilement coextrudées au niveau industriel et qui de plus se caractérise par une structure et une architecture bien maîtrisées.

A cet effet, l'invention concerne des structures à couches polymériques multiples comprenant une couche (A) à base d'au moins un polymère d'hydrocarbure fluoré liée à une couche (C) à base d'au moins un polymère d'oléfme par l'intermédiaire d'une couche (B) contenant de 100 à 10 % en poids d'au moins un polymère d'oléfine greffé et de 0 à 90 % en poids d'au moins un polymère d'hydrocarbure fluoré, le polymère d'oléfine greffé étant obtenu par greffage d'un monomère polymérisable, d'un oligomère fonctionnel ou d'un télomère fonctionnel sur un polymère d'oléfine préalablement activé.

Par structures à couches polymériques multiples comprenant une couche (A) à base d'au moins un polymère d'hydrocarbure fluoré liée à une couche (C) à base d'au moins un polymère d'oléfine, on entend désigner les structures à couches polymériques multiples contenant au moins une couche (A) à base d'au moins un polymère d'hydrocarbure fluoré liée à au moins une couche (C) à base d'au moins un polymère d'oléfine. Les structures à couches polymériques multiples selon l'invention peuvent donc contenir une ou plusieurs couches (A) à base d'au moins un polymère d'hydrocarbure fluoré liée à une ou plusieurs couches (C) à base d'au moins un polymère d'oléfine, ces couches pouvant elles-mêmes être liées à des couches d'autres polymères, de métal et/ou de tissu.

Les structures à couches polymériques multiples selon l'invention contiennent néanmoins de préférence une seule couche (A) à base d'au moins un polymère d'hydrocarbure fluoré liée à une seule couche (C) à base d'au moins un polymère d'oléfine.

Les structures à couches polymériques multiples selon l'invention comprennent une couche (B) contenant de 100 à 10 % en poids d'au moins un polymère d'oléfine greffé et de 0 à 90 % en poids d'au moins un polymère d'hydrocarbure fluoré, le polymère d'oléfine greffé étant obtenu par greffage d'un monomère polymérisable, d'un oligomère fonctionnel ou d'un télomère fonctionnel sur un polymère d'oléfine préalablement activé.

Par polymère d'oléfine préalablement activé, on entend désigner que le polymère d'oléfine est modifié avant que le monomère polymérisable, l'oligomère fonctionnel ou le télomère fonctionnel ne soit greffé pour donner lieu à la formation d'un polymère d'oléfine greffé.

Par polymère d'oléfine greffé, on entend désigner un polymère d'oléfine dont le tronc polymérique est greffé par un greffon polymérique, soit latéralement, soit en boût de chaîne.

Le taux de greffage des polymères d'oléfine greffés selon l'invention, mesuré au moyen d'un spectromètre infrarouge à transformée de Fourier, est habituellement supérieur ou égal à 0,5 % en masse. Le taux de greffage des polymères d'oléfine greffés selon l'invention est habituellement inférieur ou égal à 50, de préférence inférieur ou égal à 35, de manière particulièrement préférée inférieur ou égal à 20 % en masse.

Dans les structures à couches polymériques multiples selon l'invention, la couche (B) contient au moins 10 %, de préférence au moins 15 %, de manière particulièrement préférée au moins 20 % en poids d'au moins un polymère d'oléfine greffé.

Dans les structures à couches polymériques multiples selon l'invention, la couche (B) contient au plus 100 %, de préférence au plus 97 %, de manière particulièrement préférée au plus 95 % en poids d'au moins un polymère d'oléfine greffé.

Dans les structures à couches polymériques multiples selon l'invention, la couche (B) peut ne pas contenir de polymère d'hydrocarbure fluoré. La couche (B) contient de préférence au moins 3 %, de manière particulièrement préférée au moins 5 % en poids d'au moins un polymère d'hydrocarbure fluoré.

Dans les structures à couches polymériques multiples selon l'invention, la couche (B) contient au plus 90 %, de préférence au plus 85 %, de manière particulièrement préférée au plus 80 % en poids d'au moins un polymère d'hydrocarbure fluoré.

Selon une première variante des structures à couches polymériques multiples selon l'invention, le polymère d'oléfine greffé de la couche (B) est obtenu par greffage d'un monomère polymérisable sur un polymère d'oléfine préalablement activé par ozonisation.

Par monomère polymérisable, on entend désigner, aux fins de la présente invention, un monomère dont la polymérisation peut être initiée en présence du polymère d'oléfine préalablement activé.

Le monomère polymérisable est choisi parmi le méthacrylate de méthyle, l'acrylate d'éthyle, l'acrylate de n-butyle et le fluorure de vinylidène.

De bons résultats ont été obtenus avec le méthacrylate de méthyle.

Le polymère d'oléfine avant activation par ozonisation est de préférence choisi parmi les homopolymères d'oléfines telles que l'éthylène, le propylène, le butène-1, le 4-méthylpentène-1, l'hexène-1 et l'octène-1, les copolymères de ces différentes oléfines entre elles, les copolymères de ces oléfines avec au moins un autre monomère tel les dioléfines et les esters d'acide carboxylique insaturé et les mélanges de ces différents polymères.

Des polymères d'oléfines particulièrement préférés sont les homopolymères de l'éthylène, les homopolymères du propylène, les copolymères de l'éthylène avec au moins une autre oléfine choisie parmi le propylène, le butène-1, le 4-méthylpentène-1, l'hexène-1 et l'octène, les copolymères du propylène avec au moins une autre oléfine choisie parmi l'éthylène, le butène-1, le 4-méthylpentène-1, l'hexène-1 et l'octène-1, les homopolymères du butène-1, les copolymères de l'éthylène ou du propylène avec des quantités mineures de dioléfines ou d'esters d'acide carboxylique insaturé tels que par exemple les copolymères éthylène-butadiène, les copolymères propylène-butadiène, les copolymères éthylène-acétate de vinyle et les copolymères éthylène-acrylate d'éthyle ainsi que parmi les mélanges de ces différents polymères d'oléfmes.

Sont tout particulièrement préférés les homopolymères de l'éthylène, les homopolymères du propylène, les copolymères de l'éthylène avec au moins une autre oléfine choisie parmi le propylène, le butène-1, le 4-méthylpentène-1, l'hexène-1 et l'octène, les copolymères du propylène avec au moins une autre oléfine choisie parmi l'éthylène, le butène-1, le 4-méthylpentène-1, l'hexène-1 et l'octène-1 ainsi que les mélanges de ces différents polymères d'oléfines.

Par ozonisation, on entend désigner la réaction du polymère d'oléfine à l'état fondu avec l'ozone, éventuellement mélangé avec de l'air.

La réaction du polymère d'oléfine avec l'ozone peut être réalisée dans n'importe quel appareillage utilisable à cet effet. On peut citer par exemple un réacteur à double enveloppe en lit fluidisé.

Le temps d'ozonisation est habituellement de l'ordre de 40 à 100 minutes. La concentration en ozone est habituellement de l'ordre de 0,003 à 0,008 g/l. La réaction d'ozonisation est de préférence effectuée sous agitation mécanique et à température ambiante.

Le greffage du monomère polymérisable sur le polymère d'oléfme préalablement activé par ozonisation est habituellement réalisé alors que la polymère d'oléfine préalablement activé par ozonisation est à l'état fondu.

Le greffage du monomère polymérisable sur le polymère d'oléfine préalablement activé par ozonisation à l'état fondu peut être réalisé dans n'importe quel appareillage utilisable à cet effet. Ainsi, on peut travailler indifféremment avec des malaxeurs de type externe ou interne. Les malaxeurs de type interne sont les plus appropriés et parmi ceux-ci les malaxeurs discontinus BRABENDER® et les malaxeurs continus, tels que les extrudeuses à vis, par exemple les extrudeuses bivis corotative.

Le temps de greffage est habituellement de l'ordre de 1 à 60 minutes selon le type de malaxeur.

De manière préférée, le greffage du monomère polymérisable sur le polymère d'oléfine préalablement activé par ozonisation est réalisé dans un malaxeur continu. Le temps de greffage est alors de manière particulièrement préférée de l'ordre de 1 à 5 minutes.

La température à laquelle le greffage à lieu est habituellement comprise entre 100 et 200 °C.

Selon une deuxième variante des structures à couches polymériques multiples selon l'invention, le polymère d'oléfine greffé de la couche (B) est obtenu par greffage d'un monomère polymérisable sur un polymère d'oléfine préalablement activé par réaction avec un amorceur radicalaire.

Le monomère polymérisable est tel que défini précédemment dans la première variante des structures à couches polymériques multiples selon l'invention.

Le polymère d'oléfine avant activation par réaction avec un amorceur radicalaire est tel que défini précédemment dans la première variante des structures à couches polymériques multiples selon l'invention.

Par amorceur radicalaire, on entend désigner toute molécule pouvant par décomposition thermique générer des radicaux capables de générer des macroamorceurs par abstraction d'atomes d'hydrogène sur les chaînes du polymère d'oléfine. A titre d'exemples, on peut citer les peroxydes organiques comme le peroxyde de dicumyle et le peroxyde de di-t-butyle.

La réaction du polymère d'oléfine avec l'amorceur radicalaire a habituellement lieu alors que le polymère d'oléfine est à l'état fondu.

La réaction du polymère d'oléfine à l'état fondu avec l'amorceur radicalaire peut être réalisée dans n'importe quel appareillage utilisable à cet effet. Ainsi, on peut travailler indifféremment avec des malaxeurs de type externe ou interne. Les malaxeurs de type interne sont les plus appropriés et parmi ceux-ci les malaxeurs discontinus BRABENDER® et les malaxeurs continus, tels que les extrudeuses à vis, par exemple les extrudeuses bivis corotative.

Le temps de réaction est habituellement de l'ordre de 1 à 60 minutes selon le type de malaxeur.

De préférence, la réaction du polymère d'oléfine à l'état fondu avec l'amorceur radicalaire est réalisée dans un malaxeur continu. Le temps de réaction est alors de manière particulièrement préférée l'ordre de 1 à 5 minutes.

Le greffage du monomère polymérisable sur le polymère d'oléfine préalablement activé par réaction avec un amorceur radicalaire est de préférence réalisé en introduisant le monomère polymérisable en même temps que le polymère d'oléfine et l'amorceur radicalaire dans le malaxeur continu.

Le greffage du monomère polymérisable sur le polymère d'oléfine préalablement activé par réaction avec un amorceur radicalaire est donc, de préférence réalisé alors que le polymère d'oléfine préalablement activé par réaction avec un amorceur radicalaire est à l'état fondu.

Le temps de greffage est de manière particulièrement préférée de l'ordre de 1 à 5 minutes.

La concentration en amorceur radicalaire est habituellement de l'ordre de 0,01 à 10 % en poids par rapport à la quantité de monomère polymérisable et la température à laquelle le greffage à lieu est habituellement comprise entre 100 et 200 °C.

Selon une troisième variante des structures à couches polymériques multiples selon l'invention, le polymère d'oléfine greffé de la couche (B) est obtenu par greffage d'un oligomère fonctionnel ou d'un télomère fonctionnel sur un polymère d'oléfine préalablement activé par fonctionnalisation.

Selon un premier mode de réalisation, le polymère d'oléfine greffé est obtenu par greffage d'un oligomère fonctionnel sur un polymère d'oléfine préalablement activé par fonctionnalisation.

Par oligomère fonctionnel, on entend désigner, un polymère de faible masse moléculaire (degré de polymérisation compris entre 5 et 1000) obtenu par polymérisation radicalaire contrôlée (encore appelée polymérisation radicalaire vivante).

Par polymérisation radicalaire contrôlée (encore appelée polymérisation radicalaire vivante), on entend désigner toute polymérisation radicalaire qui via un très bon contrôle des étapes de propagation, de terminaison et de transfert, permet de contrôler la masse moléculaire moyenne, la largeur de la distribution des masses moléculaires, la structure et la fonctionnalité des chaînes des oligomères obtenus. Parmi celles-ci, on peut citer les polymérisations radicalaires appelées "Reversible Addition Fragmentation Transfer" (RAFT), "Atom Transfer Radical Polymerization" (ATRP), "Initiator Transfer Terminator" (INIFERTER), "Macromolecular Design through Interchange of Xanthates" (MADIX) et "Stable Free Radical Polymerization" (SFRP).

De préférence, l'oligomère fonctionnel est choisi parmi les oligomères fonctionnels des acrylates d'alkyles, les oligomères fonctionnels des méthacrylates d'alkyles, les oligomères fonctionnels de l'acrylamide, les oligomères fonctionnels du méthacrylamide et les oligomères fonctionnels des monomères vinyliques fluorés.

De manière particulièrement préférée, l'oligomère fonctionnel est choisi parmi les oligomères fonctionnels des acrylates d'alkyles dont les radicaux alkyles sont linéaires ou ramifiés, éventuellement substitués par une fonction hydroxyle ou éther et qui contiennent de 1 à 10 atomes de carbone, les oligomères fonctionnels des méthacrylates d'alkyles dont les radicaux alkyles sont linéaires ou ramifiés, éventuellement substitués par une fonction hydroxyle ou éther et qui contiennent de 1 à 10 atomes de carbone, les oligomères fonctionnels de l'acrylamide, les oligomères fonctionnels du méthacrylamide et les oligomères fonctionnels des monomères vinyliques fluorés.

A titre d'exemples d'acrylates d'alkyles dont les radicaux alkyles sont linéaires ou ramifiés, éventuellement substitués par une fonction hydroxyle ou éther et qui contiennent de 1 à 10 atomes de carbone, on peut citer l'acrylate de méthyle, l'acrylate d'éthyle, l'acrylate d'isopropyle, l'acrylate de n-butyle, l'acrylate d'isobutyle, l'acrylate de t-butyle, l'acrylate d'hexyle, l'acrylate d'éfliylhexyle et l'acrylate de glycidyle.

A titre d'exemples de méthacrylates d'alkyles dont les radicaux alkyles sont linéaires ou ramifiés, éventuellement substitués par une fonction hydroxyle ou éther et qui contiennent de 1 à 10 atomes de carbone, on peut citer le méthacrylate de méthyle, le méthacrylate d'éthyle, le méthacrylate d'isopropyle, le méthacrylate de n-butyle, le méthacrylate d'isobutyle, le méthacrylate de t-butyle, le méthacrylate d'hexyle, le méthacrylate d'éthylhexylé et le méthacrylate de glycidyle.

A titre d'exemples de monomères vinyliques fluorés, on peut citer les acrylates et les méthacrylates de fluoroalkyles tels les acrylates et les méthacrylates de trifluoroéthyle, de trifluoropropyle, de pentafluoropropyle et d'hexafluoroisopropyle et les oléfines fluorées telles le tétrafluoroéthylène, le trifluoroéthylène, de fluorure de vinylidène, le fluorure de vinyle, le monochlorotrifluoroéthylène, l'hexafluoropropylène.

De manière tout particulièrement préférée, l'oligomère fonctionnel est choisi parmi les oligomères fonctionnels du méthacrylate de méthyle, de l'acrylate d'éthyle, de l'acrylate de n-butyle et du fluorure de vinylidène.

De bons résultats ont été obtenus avec les oligomères fonctionnels du méthacrylate de méthyle.

Selon un second mode de réalisation, le polymère d'oléfine greffé est obtenu par greffage d'un télomère fonctionnel sur un polymère d'oléfine préalablement activé par fonctionnalisation.

Par télomère fonctionnel, on entend désigner un polymère de faible masse moléculaire (degré de polymérisation compris entre 5 et 200) obtenu par télomérisation radicalaire.

Par télomérisation radicalaire, on entend désigner toute polymérisation radicalaire en présence d'un agent de transfert appelé agent télogène.

De préférence, le télomère fonctionnel est choisi parmi les télomères fonctionnels des acrylates d'alkyles, les télomères fonctionnels des méthacrylates d'alkyles, les télomères fonctionnels de l'acrylamide, les télomères fonctionnels du méthacrylamide et les télomères fonctionnels des monomères vinyliques fluorés.

De manière particulièrement préférée, le télomère fonctionnel est choisi parmi les télomères fonctionnels des acrylates d'alkyles dont les radicaux alkyles sont linéaires ou ramifiés, éventuellement substitués par une fonction hydroxyle ou éther et qui contiennent de 1 à 10 atomes de carbone, les télomères fonctionnels des méthacrylates d'alkyles dont les radicaux alkyles sont linéaires ou ramifiés, éventuellement substitués par une fonction hydroxyle ou éther et qui contiennent de 1 à 10 atomes de carbone, les télomères fonctionnels de l'acrylamide, les télomères fonctionnels du méthacrylamide et les télomères fonctionnels des monomères vinyliques fluorés.

A titre d'exemples d'acrylates d'alkyles dont les radicaux alkyles sont linéaires ou ramifiés, éventuellement substitués par une fonction hydroxyle ou éther et qui contiennent de 1 à 10 atomes de carbone, on peut citer l'acrylate de méthyle, l'acrylate d'éthyle, l'acrylate d'isopropyle, l'acrylate de n-butyle, l'acrylate d'isobutyle, l'acrylate de t-butyle, l'acrylate d'hexyle, l'acrylate d'éthylhexyle et l'acrylate de glycidyle.

A titre d'exemples de méthacrylates d'alkyles dont les radicaux alkyles sont linéaires ou ramifiés, éventuellement substitués par une fonction hydroxyle ou éther et qui contiennent de 1 à 10 atomes de carbone, on peut citer le méthacrylate de méthyle, le méthacrylate d'éthyle, le méthacrylate d'isopropyle, le méthacrylate de n-butyle, le méthacrylate d'isobutyle, le méthacrylate de t-butyle, le méthacrylate d'hexyle, le méthacrylate d'éthylhexyle et le méthacrylate de glycidyle.

A titre d'exemples de monomères vinyliques fluorés, on peut citer les acrylates et les méthacrylates de fluoroalkyles tels les acrylates et les méthacrylates de trifluoroéthyle, de trifluoropropyle, de pentafluoropropyle et d'hexafluoroisopropyle et les oléfines fluorées telles le tétrafluoroéthylène, le trifluoroéthylène, de fluorure de vinylidène, le fluorure de vinyle, le monochlorotrifluoroéthylène, l'hexafluoropropylène.

De manière tout particulièrement préférée, le télomère fonctionnel est choisi parmi les télomères fonctionnels du méthacrylate de méthyle, de l'acrylate d'éthyle, de l'acrylate de n-butyle et du fluorure de vinylidène.

De bons résultats ont été obtenus avec les télomères fonctionnels du méthacrylate de méthyle.

Les polymères d'oléfine préalablement activés par fonctionnalisation sur lesquelles on peut greffer les télomères fonctionnels ou les oligomères fonctionnels sont de préférence des polymères d'oléfine fonctionnalisés par des fonctions époxyde, anhydride maléique, carboxylique, hydroxyle, amine, oxazoline, azlactone ou isocyanate.

Parmi les polymères d'oléfine fonctionnalisés par des fonctions époxyde, on peut citer les copolymères statistiques éthylène-méthacrylate de glycidyle, éthylène-acrylate de méthyle-méthacrylate de glycidyle, éthylène-acrylate d'éthyle-méthacrylate de glycidyle, éthylène-acrylate de butyle-méthacrylate de glycidyle, éthylène-acrylate de glycidyle, éthylène-acrylate de méthyle-acrylate de glycidyle, éthylène-acrylate d'éthyle-acrylate de glycidyle, éthylène-acrylate de butyle-acrylate de glycidyle et les copolymères greffés où la fonction réactive, en l'occurrence le méthacrylate de glycidyle ou l'acrylate de glycidyle, est greffée sur des polymères d'oléfines.

Parmi les polymères d'oléfine fonctionnalisées par des fonctions anhydride maléique, on peut citer les copolymères statistiques de type éthylène-acrylate de méthyle-anhydride maléique ou de type éthylène-acrylate d'éthyle-anhydride maléique et les copolymères greffés où la fonction réactive, en l'occurrence l'anhydride maléique, est greffée sur des polymère d'oléfines.

Parmi les polymères d'oléfine fonctionnalisés par d'autres fonctions réactives de type carboxylique, hydroxyle, amine, oxazoline, azlactone et isocyanate, on peut citer les copolymères greffés obtenus par greffage radicalaire de monomères portant les fonctions réactives citées sur des polymères d'oléfines.

Le greffage de l'oligomère fonctionnel ou du télomère fonctionnel sur le polymère d'oléfine préalablement activé par fonctionnalisation est habituellement réalisé alors que le polymère d'oléfine préalablement activé par fonctionnalisation est à l'état fondu.

Le greffage de l'oligomère fonctionnel ou du télomèré fonctionnel sur le polymère d'oléfine préalablement activé par fonctionnalisation à l'état fondu peut être réalisé dans n'importe quel appareillage utilisable à cet effet. Ainsi, on peut travailler indifféremment avec des malaxeurs de type externe ou interne. Les malaxeurs de type interne sont les plus appropriés et parmi ceux-ci les malaxeurs discontinus BRABENDER® et les malaxeurs continus, tels que les extrudeuses à vis, par exemple les extrudeuses bivis corotative.

Le temps de greffage est habituellement de l'ordre de 1 à 60 minutes selon le type de malaxeur.

De manière préférée, le greffage de l'oligomère fonctionnel ou du télomère fonctionnel sur le polymère d'oléfine préalablement activé par fonctionnalisation est réalisé dans un malaxeur continu. Le temps de greffage est alors de manière particulièrement préférée de l'ordre de 1 à 5 minutes.

La température à laquelle le greffage à lieu est habituellement comprise entre 100 et 200 °C.

Un catalyseur peut être ajouté pour accélérer la réaction de greffage comme par exemple la N,N diméthyl lauryl amine en des quantités de l'ordre de 0,1 à 1 % en poids.

Les structures à couches polymériques multiples selon l'invention comprennent une couche (C) à base d'au moins un polymère d'oléfine.

Par polymères d'oléfine pour la couche (C), on entend désigner les homopolymères d'oléfines telles que l'éthylène, le propylène, le butène-1, le 4-méthylpentène-1, l'hexène-1 et l'octène-1, les copolymères de ces différentes oléfines entre elles, les copolymères de ces oléfines avec au moins un autre monomère tel les dioléfines et les esters d'acide carboxylique insaturé et les mélanges de ces différents polymères.

Des polymères d'oléfines particulièrement préférés sont les homopolymères de l'éthylène, les homopolymères du propylène, les copolymères de l'éthylène avec au moins une autre oléfine choisie parmi le propylène, le butène-1, le 4-méthylpentène-1, l'hexène-1 et l'octène, les copolymères du propylène avec au moins une autre oléfine choisie parmi l'éthylène, le butène-1, le 4-méthylpentène-l, l'hexène-1 et l'octène-1, les homopolymères du butène-1, les copolymères de l'éthylène ou du propylène avec des quantités mineures de dioléfines ou d'esters d'acide carboxylique insaturé tels que par exemple les copolymères éthylène-butadiène, les copolymères propylène-butadiène, les copolymères éthylène-acétate de vinyle et les copolymères éthylène-acrylate d'éthyle ainsi que parmi les mélanges de ces différents polymères d'oléfines.

Sont tout particulièrement préférés les homopolymères de l'éthylène, les homopolymères du propylène, les copolymères de l'éthylène avec au moins une autre oléfme choisie parmi le propylène, le butène-1, le 4-méthylpentène-1, l'hexène-1 et l'octène, les copolymères du propylène avec au moins une autre oléfine choisie parmi l'éthylène, le butène-1, le 4-méthylpentène-1, l'hexène-1 et l'octène-1 ainsi que les mélanges de ces différents polymères d'oléfines.

D'autres polymères compatibles avec le polymère d'oléfine constituant la couche (C) peuvent également être mélangés avec ce dernier.

Le polymère d'oléfine constituant la couche (C) peut être de nature identique ou différente du polymère d'oléfine utilisé pour préparer le polymère d'oléfine greffé de la couche (B). Avantageusement, on utilise comme constituant de la couche (C) un polymère d'oléfine de la même nature que le polymère d'oléfine utilisé pour préparer le polymère d'oléfine greffé de la couche (B).

Ainsi, selon une première variante, le polymère d'oléfine utilisé pour préparer le polymère d'oléfine greffé de la couche (B) et le polymère d'oléfme de la couche (C) sont de manière particulièrement préférée choisis parmi les homopolymères de l'éthylène, les copolymères de l'éthylène avec au moins une autre oléfine choisie parmi le propylène, le butène-1, le 4-méthylpentène-1, l'hexène-1 et l'octène et les mélanges de ces différents polymères de l'éthylène.

Selon une seconde variante, le polymère d'oléfine utilisé pour préparer le polymère d'oléfme greffé de la couche (B) et le polymère d'oléfine de la couche (C) sont de manière particulièrement préférée choisis parmi les homopolymères du propylène, les copolymères du propylène avec au moins une autre oléfine choisie parmi l'éthylène, le butène-1, le 4-méthylpentène-1, l'hexène-1 et l'octène-1 et les mélanges de ces différents polymères du propylène.

Les structures à couches polymériques multiples selon l'invention comprennent également une couche (A) à base d'au moins un polymère d'hydrocarbure fluoré.

Par polymère d'hydrocarbure fluoré, on entend désigner les homopolymères et les copolymères obtenus à partir de monomères monoéthyléniques contenant au moins 2 atomes de carbone et au moins 1 atome de fluor. Les monomères monoéthyléniques peuvent en outre contenir un ou plusieurs atomes de chlore en plus des atomes de fluor. On entend également désigner les mélanges d'homopolymères et de copolymères. Comme exemples de polymère d'hydrocarbure fluoré utilisable dans la présente invention, on peut citer notamment les homopolymères et les copolymères du fluorure de vinylidène, du fluorure de vinyle, du trifluoréthylène, du chlorotrifluoréthylène, du tétrafluoréthylène et de l'hexafluoropropylène ainsi que les copolymères d'un de ces monomères avec un autre monomère monoéthylénique non halogéné tel l'éthylène, l'acétate de vinyle et les monomères acryliques ou méthacryliques.

De manière plus que préférée, le polymère d'hydrocarbure fluoré de la couche (A) est un polymère du fluorure de vinylidène.

Par polymère du fluorure de vinylidène, on entend désigner aux fins de la présente invention tous les polymères contenant au moins environ 50 % en poids d'unités monomériques dérivées du fluorure de vinylidène. Les polymères du fluorure de vinylidène qui peuvent convenir à la réalisation des structures à couches polymériques multiples selon l'invention comprennent donc aussi bien les homopolymères du fluorure de vinylidène, que les copolymères du fluorure de vinylidène contenant des unités monomériques dérivées d'un ou de plusieurs comonomères éthyléniquement insaturés, avantageusement fluorés, de même que les mélanges de ces polymères. A titre d'exemples de comonomères fluorés utilisables, on peut mentionner le fluorure de vinyle, le trifluoréthylène, le chlorotrifluoréthylène, le tétrafluoréthylène et l'hexafluoropropylène.

Le polymère d'hydrocarbure fluoré constituant la couche (A) peut être de nature identique ou différente du polymère d'hydrocarbure fluoré qui peut être un des constituants de la couche (B). Avantageusement, on utilise comme constituant de la couche (A) un polymère d'hydrocarbure fluoré de la même nature que le polymère d'hydrocarbure fluoré qui est un des constituants de la couche (B).

De préférence, le polymère d'hydrocarbure fluoré de la couche (A) et le polymère d'hydrocarbure fluoré de la couche (B) sont un polymère du fluorure de vinylidène.

D'autres polymères compatibles avec le polymère d'hydrocarbure fluoré constituant la couche (A) peuvent également être mélangés avec ce dernier. Un exemple d'un tel mélange est une composition de polymère du fluorure de vinylidène et de polyméthacrylate de méthyle.

Il est entendu que chacun des polymères constitutifs des structures à couches polymériques multiples selon l'invention peut comprendre les additifs usuels utilisés lors de la fabrication ou lors de la mise en oeuvre de ce polymère, tels que, par exemple, des lubrifiants, des plastifiants, des stabilisants thermiques, des stabilisants à la lumière, des charges particulaires ou fibreuses, des pigments, des ignifugeants, etc., pour autant que ces additifs ne perturbent pas les objets de la présente invention.

Les structures à couches polymériques multiples selon l'invention ont le grand avantage de ne faire intervenir qu'un seul adhésif qui puisse se lier de manière satisfaisante à une couche de polymère d'hydrocarbure fluoré d'un côté et à une couche de polymère d'oléfine de l'autre côté et qui de plus se caractérise par une structure et une architecture bien maîtrisées. Ces structures présentent également l'avantage d'allier une bonne adhésion à de bonnes propriétés barrière et à un coût pas trop élevé, d'être facilement coextrudées au niveau industriel.

L'invention concerne également un procédé de préparation des structures à couches polymériques multiples selon l'invention.

Pour préparer les structures à couches polymériques multiples selon l'invention, on peut faire appel à toutes les techniques usuelles d'assemblage de couches polymériques. A titre d'exemple de pareilles techniques, on peut citer le thermocollage à l'intervention d'une solution de la couche (B) à base d'un adhésif polymérique dans un solvant ou un mélange de solvants. D'autres techniques d'assemblage de couches polymériques usuelles et appropriées pour réaliser les structures à couches polymériques multiples selon l'invention sont celles dans lesquelles les polymères constitutifs sont mis en oeuvre à une température au moins égale à leur température de ramollissement. De préférence, la préparation des structures à couches polymériques multiples selon l'invention est réalisée par colaminage, coextrusion par exemple la coextrusion-doublage, la coextrusion-soufflage et la coextrusion-moulage, extrusion-couchage, enduction, surinj ection ou coinjection.

Le procédé de préparation des structures à couches polymériques multiples selon l'invention est réalisé de manière particulièrement préférée par colaminage, coextrusion ou surinjection.

Le choix de l'une ou l'autre de ces techniques d'assemblage se fait en fonction de l'usage auquel on destine les structures à couches polymériques multiples. Par exemple, les tuyaux, les tubes, les films, les feuilles et les plaques sont de préférence assemblés par coextrusion.

Ainsi, le procédé de préparation de structures à couches polymériques multiples est de préférence effectué par coextrusion d'une couche (A) à base d'au moins un polymère d'hydrocarbure fluoré et d'une couche (C) à base d'au moins un polymère d'oléfme auxquelles on coextrude en intermédiaire servant de liant une couche (B) contenant de 100 à 10 % en poids d'au moins un polymère d'oléfine greffé et de 0 à 90 % en poids d'au moins un polymères d'hydrocarbure fluoré, le polymère d'oléfine greffé étant obtenu par greffage d'un monomère polymérisable, d'un oligomère fonctionnel ou d'un télomère fonctionnel sur un polymère d'oléfine préalablement activé.

L'épaisseur des couches polymériques constitutives des structures à couches polymériques multiples selon l'invention et l'épaisseur totale desdites structures ne sont pas critiques et dépendent bien entendu de l'usage auquel on les destine.

L'épaisseur de la couche (A) peut être comprise entre 50 µm et 600 µm. L'épaisseur de la couche (B) peut être comprise entre 30 µm et 400 µm.

L'invention concerne également l'utilisation des structures à couches polymériques multiples selon l'invention pour la fabrication de tubes, de tuyaux, de gainage, de films, de feuilles, de profilés, de plaques et de corps creux.

Les structures à couches polymériques multiples selon l'invention peuvent être utilisées avantageusement dans des domaines d'application exigeant une bonne imperméabilité aux liquides et aux gaz, associée à une inertie chimique élevée. A titre d'exemples pratiques non limitatifs d'utilisations de structures à couches polymériques multiples selon l'invention, on peut signaler des tuyaux destinés au transport de carburant, de produits corrosifs ou d'eaux ultra pures; des tubes conduisant du gaz; des films destinés à la protection contre la corrosion de pièces de carrosserie de véhicules automobiles; des films, des feuilles et des plaques composites pour des applications dans le domaine du bâtiment et de l'agriculture; des flacons d'emballage; des réservoirs de stockage de liquides et des réservoirs à essence.

Les structures à couches polymériques multiples de la présente invention possèdent une bonne force de pelage et combinent les avantages d'un polymère d'hydrocarbure fluoré avec les propriétés inhérentes au polymère d'oléfine auquel il est lié.

Les exemples qui suivent sont destinés à illustrer la présente invention sans toutefois en limiter la portée.

### Exemples 1 à 3

### Matériaux utilisés

Le polyéthylène utilisé pour la synthèse de polyéthylène greffé selon les exemples 1 et 2 est un polyéthylène haute densité caractérisé par :
- des masses moléculaires moyennes en nombre et en poids, mesurées par chromatographie d'exclusion stérique dans le trichlorobenzène (concentration de la solution 0,5 g/l) à 135 °C, respectivement de 16 000 g/mole et de 160 000 g/mole,
- une densité de 0,938 g/cm³ (mesurée selon la norme ASTM D 1505),
- un MFI (indice de fluidité en fondu mesuré selon la norme ASTM D 1238, à 190 °C sous une charge de 5 kg) de 2,3 g/10 min, et
- une température de fusion de 127 °C.

Le monomère polymérisable utilisé est le méthacrylate de méthyle de pureté 97% commercialisé par ALDRICH.

L'amorceur utilisé est le peroxyde de dicumyle de pureté 98% commercialisé par ALDRICH.

Le polyfluorure de vinylidène utilisé pour la réalisation des structures à couches polymériques multiples selon l'exemple 3 (couche (A)) est un homopolymère du fluorure de vinylidène SOLEF® 1008 commercialisé par SOLVAY.

Le polyfluorure de vinylidène utilisé pour la réalisation de la couche intermédiaire (couche (B)) des structures à couches polymériques multiples selon l'exemple 3 est un homopolymère du fluorure de viriylidène SOLEF® 1010 commercialisé par SOLVAY.

Le polyéthylène utilisé pour la réalisation de la structure à couches polymériques multiples selon l'exemple 3 (couche (C)) est le polyéthylène haute densité ELTEX® TUB 121 commercialisé par SOLVAY.

### Détermination du taux de greffage au moyen d'un spectromètre infrarouge à transformée de Fourier

Cette méthode repose sur l'établissement d'une courbe d'étalonnage au moyen de mélanges mécaniques de polyéthylène/polyméthacrylate de méthyle de proportions connues. Des films minces ont été réalisés par pressage de chacun de ces mélanges à 190 °C pendant 1 minute à 150 bar. Les films obtenus ont ensuite été analysés au moyen d'un spectromètre à transformée de Fourier IR-TF de type Nicolet 510 P. Des spectres obtenus, on a calculé le rapport I₁₇₃₂/I₁₃₆₈ (I₁₇₃₂ étant l'intensité correspondant au groupement carbonyle du polyméthylinéthacrylate et I₁₃₆₈ l'intensité correspondant à la déformation symétrique des groupements méthyles dans le polyéthylène) que l'on a reporté sur un graphe obtenant ainsi une courbe d'étalonnage I₁₇₃₂/I₁₃₆₈ en fonction du pourcentage en poids de polyméthylméthacrylate.

Le taux de greffage du méthylméthacrylate dans le polyéthylène greffé a été obtenu en déterminant le rapport d'intensités I₁₇₃₂/I₁₃₆₈ à partir du spectre infrarouge du polyéthylène greffé et en reportant cette valeur sur la courbe d'étalonnage.

### Détermination de la force de pelage

La force de pelage a été mesurée sur une machine INSTRON CORPORATION après 7 jours de repos des structures pressées par la méthode suivante : on a mesuré le niveau d'adhésion entre la couche de polyfluorure de vinylidène et la couche de polyéthylène haute densité en effectuant un essai de pelage sur des languettes de 10 mm sur 200 mm issues d'une plaque pressée de 120/240 partiellement délaminées, chaque couche externe étant attachée aux mors de la machine et les mors étant écartés à une vitesse constante de 50 mm/min. Le résultat a été exprimé en N/cm.

### Exemple 1 : Synthèse de polyéthylène greffé par du méthacrylate de méthyle à partir de polyéthylène activé par ozonisation

L'ozonisation du polyéthylène haute densité a été réalisée dans un réacteur à double enveloppe en lit fluidisé par un mélange air/ozone. Le générateur d'ozone était un ozoniseur de laboratoire fabriqué par TRAILIGAZ sous la référence "Minibloc 76". La concentration en ozone produite était égale à 0,0083 g/l. Après un temps d'ozonisation de 45 minutes sous un débit air/ozone de 1500 l.h⁻¹, une puissance du générateur d'ozone de 240 w.h⁻¹, à température ambiante, le milieu réactionnel a été placé sous courant d'air pour éliminer l'ozone résiduel.

Le polyéthylène ozonisé et le méthacrylate de méthyle (10 % en masse) préalablement mélangés, ont ensuite été placés dans une étuve à 55°C pendant 5 heures. Le greffage en masse a alors été effectué dans une extrudeuse bivis corotative interpénétrée de type CLEXTRAL BC21. L'extrusion a été réalisée à 150°C. Le temps de séjour moyen dans l'extrudeuse était de l'ordre de 100-150 secondes.

Le polyéthylène greffé obtenu a enfin été purifié par mise en solution dans le xylène à reflux pendant une heure et précipitation dans l'acétone à température ambiante. Après séchage, le taux de greffage mesuré au moyen du spectromètre à transformée de Fourier était de 1,40 % en masse.

### Exemple 2 : Synthèse d'un polyéthylène greffé par du méthacrylate de méthyle à partir de polyéthylène activé par la réaction avec un amorceur radicalaire

Le polyéthylène haute densité, le méthacrylate de méthyle (18% en masse) et le peroxyde de dicumyle (0.6% en masse) préalablement mélangés ont été laissés 30 minutes à température ambiante. Le greffage en masse a alors été effectué dans une extrudeuse bivis corotative interpénétrée de type CLEXTRAL BC21. L'extrusion a été réalisée à 150°C. Le temps de séjour moyen dans l'extrudeuse était de l'ordre de 100-150 secondes.

Le polyéthylène greffé obtenu a enfin été purifié par mise en solution dans le xylène à reflux pendant une heure et précipitation dans l'acétone à température ambiante. Après séchage, le taux de greffage mesuré au moyen du spectromètre à transformée de Fourier était de 4 % en masse.

### Exemple 3 : Tests d'adhésion

Une structure à trois couches a été obtenue par pressage à chaud à 190 °C pendant 5 minutes à 100 bars d'un film de polyéthylène haute densité ELTEX® TUB 121 (PEhd) d'une épaisseur de 1 mm (couche (C)), d'un film de polyfluorure de vinylidène SOLEF® 1008 (PVDF) d'une épaisseur de 100 µm (couche (A)) et à titre de couche intermédiaire (couche (B)) 5 g d'un mélange sous forme de poudre d'un polyéthylène greffé et de polyfluorure de vinylidène SOLEF® 1010 dans un rapport 1/3 polyéthylène greffé / 2/3 polyfluorure de vinylidène SOLEF® 1010. Les polyéthylènes greffés testés étaieht le copolymère greffé obtenu à l'exemple 1 et le copolymère greffé obtenu à l'exemple 2. Une structure à deux couches (sans couche intermédiaire (B)) a été réalisée à titre d'exemple comparatif.

Le tableau suivant regroupe les valeurs de la force de pelage maximum mesurées pour les différentes structures.

| Systèmes étudiés | Force de pelage maximum (N/cm) |
|---|---|
| PEhd - PVDF | 0 |
| PEhd - copolymère greffé de l'exemple 1 - PVDF | 17,9 |
| PEhd - copolymère greffé de l'exemple 2 - PVDF | 18,6 |

### Exemples 4 à 8

### Exemple 4 : Synthèse d'un télomère fonctionnel du méthacrylate de méthyle

Dans un ballon bicol, équipé d'un réfrigérant relié à une arrivée d'azote et d'un agitateur magnétique, ont été introduits 5 g de méthacrylate de méthyle, 0,041 g d'azobisisobutyronitrile, 0,325 g de mercaptoéthanol et 3,369 g d'acétonitrile. Après avoir réalisé un bullagé d'azote au sein du mélange réactionnel, le ballon a été plongé dans un bain d'huile thermostaté à 70 °C pour une durée de 8 h. Au terme de la réaction, on a éliminé du milieu réactionnel l'acétonitrile à l'aide d'un évaporateur rotatif (pression = 160 mm Hg, température = 50 °C); le télomère ainsi obtenu a été dissout dans 10 ml de tétrahydrofuranne et finalement précipité dans 400 ml d'eau. Le télomère a été récupéré par filtration sur verre fritté n°4, séché puis mis à l'étuve à 50 °C pendant 24 h.

Le télomère du méthacrylate de méthyle obtenu se caractérisait par une masse moléculaire moyenne en nombre et un indice de polydispersité, mesurés par chromatographie d'exclusion stérique dans le tétrahydrofuranne thermostaté à 30 °C, après un étalonnage de l'appareil au moyen d'échantillons de polyméthacrylate de méthyle standards isomoléculaires, respectivement de 1500 g/mole et de 2.

### Exemple 5 : Synthèse de polypropylène greffé par du méthacrylate de méthyle par greffage d'un télomère fonctionnel du méthacrylate de méthyle sur un polymère du propylène préalablement activé par fonctionnalisation

Dans un malaxeur interne du type BRABENDER® , on a introduit 32 g de polypropylène greffé anhydride maléique commercialisé sous la marque ADMER® QF500E et 8 g du télomère fonctionnel du méthacrylate de méthyle synthétisé à l'exemple 4. Le mélange a été malaxé à 180°C pendant 10 minutes et à une vitesse de rotation de 32 tours/minute. Le mélange obtenu a ensuite été utilisé pour la réalisation d'un film comme décrit à l'exemple 6.

### Exemple 6 : Réalisation de films

Des films de 100 µm d'épaisseur ont été réalisés par pressage de 2 g de matière pendant 2 minutes à 200 °C sous une pression de 100 bars, après un préchauffage de 2 minutes à 200 °C pour les matières suivantes :
- le polypropylène commercialisé sous la marque ISPLEN® PP-070;
- le polypropylène greffé anhydride maléique commercialisé sous la marque ADMER® QF500E;
- le polypropylène greffé par du méthacrylate de méthyle synthétisé à l'exemple 5 et
- le polyfluorure de vinylidène homopolymère SOLEF® 1010/0001 commercialisé par SOLVAY.

### Exemple 7 : Test d'adhésion sur une structure à trois couches

Une structure à trois couches a été réalisée au départ de films réalisés à l'exemple 6.

Cette structure à trois couches a été obtenue par pressage à chaud à 200 °C pendant 2 minutes sous une pression de 100 bars, après un préchauffage à 200 °C pendant 2 minutes, du film de polypropylène ISPLEN® PP-070 (couche (C)), du film de polyfluorure de vinylidène homopolymère SOLEF® 1010/0001 (couche (A)) et à titre de couche intermédiaire (couche (B)) du film de polypropylène greffé par du méthacrylate de méthyle synthétisé à l'exemple 5.

La structure à trois couches obtenue a été soumise au test d'adhésion par arrachement manuel qui consiste à tirer manuellement sur les deux films des couches extérieures (A et C) et à observer si ces deux films adhèrent l'un à l'autre.

L'application du test d'adhésion par arrachement manuel à la structure à trois couches décrite ci-dessus a permis de constater qu'une bonne adhérence existait entre le film constituant la couche (A) et celui constituant la couche (C).

### Exemple 8 (comparatif) : Tests d'adhésion sur des structures à deux couches

Des structures à deux couches (sans couche intermédiaire (B)) ont été réalisées à titre d'exemples comparatifs au départ de films réalisés à l'exemple 6. Ces structures à deux couches ont été obtenues par pressage à chaud à 200 °C pendant 2 minutes sous une pression de 100 bars, après préchauffage à 200 °C pendant 2 minutes du film de polyfluorure de vinylidène homopolymère SOLEF® 1010/0001 à titre de couche (A) et, à titre de couche (C), soit du film de polypropylène ISPLEN® PP-070, soit du film de polypropylène greffé anhydride maléique ADA4ER® QF500E.

Les deux structures à deux couches obtenues ont été soumises au test d'adhésion par arrachement manuel. Dans les deux cas, on a constaté qu'il n'existait aucune adhérence entre le film constituant la couche (A) et le film constituant la couche (C), les films se détachant l'un de l'autre très facilement.

## Revendications

1. Structures à couches polymériques multiples **caractérisées en ce qu'**elles comprennent une couche (A) à base d'au moins un polymère d'hydrocarbure fluoré liée à une couche (C) à base d'au moins un polymère d'oléfine par l'intermédiaire d'une couche (B) contenant de 100 à 10 % en poids d'au moins un polymère d'oléfine greffé et de 0 à 90 % en poids d'au moins un polymère d'hydrocarbure fluoré, le polymère d'oléfine greffé étant obtenu par greffage d'un monomère polymérisable choisi parmi le méthacrylate de méthyle, l'acrylate d'éthyle, l'acrylate de n-butyle et le fluorure de vinylidène, d'un oligomère fonctionnel ou d'un télomère fonctionnel sur un polymère d'oléfine préalablement activé.

2. Structures à couches polymériques multiples selon la revendication 1, **caractérisées en ce que** le polymère d'oléfine greffé est obtenu par greffage d'un monomère polymérisable sur un polymère d'oléfine préalablement activé par ozonisation.

3. Structures à couches polymériques multiples selon la revendication 1, **caractérisées en ce que** le polymère d'oléfine greffé est obtenu par greffage d'un monomère polymérisable sur un polymère d'oléfine préalablement activé par réaction avec un amorceur radicalaire.

4. Structures à couches polymériques multiples selon la revendication 1, **caractérisées en ce que** le polymère d'oléfine greffé est obtenu par greffage d'un oligomère fonctionnel ou d'un télomère fonctionnel sur un polymère d'oléfine préalablement activé par fonctionnalisation.

5. Structures à couches polymériques multiples selon la revendication 4, **caractérisées en ce que** l'oligomère fonctionnel est choisi parmi les oligomères fonctionnels des acrylates d'alkyles, les oligomères fonctionnels des méthacrylates d'alkyles, les oligomères fonctionnels de l'acrylamide, les oligomères fonctionnels du méthacrylamide et les oligomères fonctionnels des monomères vinyliques fluorés.

6. Structures à couches polymériques multiples selon la revendication 4, **caractérisées en ce que** le télomère fonctionnel est choisi parmi les télomères fonctionnels des acrylates d'alkyle, les télomères fonctionnels des méthacrylates d'alkyles, les télomères fonctionnels de l'acrylamide, les télomères fonctionnels du méthacrylamide et les télomères fonctionnels des monomères vinyliques fluorés.

7. Structures à couches polymériques multiples selon l'une quelconque des revendications 1 à 6, **caractérisées en ce que** le polymère d'oléfine utilisé pour préparer le polymère d'oléfine greffé de la couche (B) et le polymère d'oléfine de la couche (C) sont choisis parmi les homopolymères de l'éthylène, les copolymères de l'éthylène avec au moins une autre oléfine choisie parmi le propylène, le butène-1, le 4-méthylpentène-1, l'hexène-1 et l'octène et les mélanges de ces différents polymères de l'éthylène.

8. Structures à couches polymériques multiples selon l'une quelconque des revendications 1 à 6, **caractérisées en ce que** le polymère d'oléfine utilisé pour préparer le polymère d'oléfine greffé de la couche (B) et le polymère d'oléfine de la couche (C) sont choisis parmi les homopolymères du propylène, les copolymères du propylène avec au moins une autre oléfine choisie parmi l'éthylène, le butène-1, le 4-méthylpentène-1, l'hexène-1 et l'octène-1 et les mélanges de ces différents polymères du propylène.

9. Structures à couches polymériques multiples selon l'une quelconque des revendications 1 à 8, **caractérisées en ce que** le polymère d'hydrocarbure fluoré de la couche (A) et le polymère d'hydrocarbure halogéné de la couche (B) sont un polymère du fluorure de vinylidène.

10. Procédé de préparation de structures à couches polymériques multiples selon l'une quelconque des revendications 1 à 9 par colaminage, coextrusion, extrusion-couchage, enduction, surinjection ou coinjection.

11. Utilisation de structures à couches polymériques multiples selon l'une quelconque des revendications 1 à 9 pour la fabrication de tubes, de tuyaux, de gainages, de films, de feuilles, de profilés, de plaques et de corps creux.

## Claims

1. Multilayer polymer structures, **characterized in that** they comprise a layer (A) based on at least one fluorohydrocarbon polymer linked to a layer (C) based on at least one olefin polymer via a layer (B) containing from 100 % to 10 % by weight of at least one grafted olefin polymer and from 0 to 90 % by weight of at least one fluorohydrocarbon polymer, the grafted olefin polymer being obtained by grafting a polymerizable monomer chosen among methyl methacrylate, ethyl acrylate, n-butyl acrylate and vinylidene fluoride, a functional oligomer or a functional telomer onto a preactivated olefin polymer.

2. Multilayer polymer structures according to Claim 1, **characterized in that** the grafted olefin polymer is obtained by grafting a polymerizable monomer onto an olefin polymer that has been preactivated by ozonization.

3. Multilayer polymer structures according to Claim 1, **characterized in that** the grafted olefin polymer is obtained by grafting a polymerizable monomer onto an olefin polymer that has been preactivated by reaction with a free-radical initiator.

4. Multilayer polymer structures according to Claim 1, **characterized in that** the grafted olefin polymer is obtained by grafting a functional oligomer or a functional telomer onto an olefin polymer that has been preactivated by functionalization.

5. Multilayer polymer structures according to Claim 4, **characterized in that** the functional oligomer is chosen from alkyl acrylate functional oligomers, alkyl methacrylate functional oligomers, acrylamide functional oligomers, methacrylamide functional oligomers and fluorovinyl monomer functional oligomers.

6. Multilayer polymer structures according to Claim 4, **characterized in that** the functional telomer is chosen from alkyl acrylate functional telomers, alkyl methacrylate functional telomers, acrylamide functional telomers, methacrylamide functional telomers and fluorovinyl monomer functional telomers.

7. Multilayer polymer structures according to any one of Claims 1 to 6, **characterized in that** the olefin polymer used to prepare the grafted olefin polymer of the layer (B) and the olefin polymer of the layer (C) are chosen from ethylene homopolymers, copolymers of ethylene with at least one other olefin chosen from propylene, 1-butene, 4-methyl-1-pentene, 1-hexene and octene, and blends of these various ethylene polymers.

8. Multilayer polymer structures according to any one of Claims 1 to 6, **characterized in that** the olefin polymer used to prepare the grafted olefin polymer of the layer (B) and the olefin polymer of the layer (C) are chosen from propylene homopolymers, copolymers of propylene with at least one other olefin chosen from ethylene, 1-butene, 4-methyl-1-pentene, 1-hexene and 1-octene, and blends of these various propylene polymers.

9. Multilayer polymer structures according to any one of Claims 1 to 8, **characterized in that** the fluorohydrocarbon polymer of the layer (A) and the fluorohydrocarbon polymer of the layer (B) are a vinylidene fluoride polymer.

10. Process for preparing multilayer polymer structures according to any one of Claims 1 to 9, by colaminating, coextrusion, extrusion-laminating, coating, overinjection-moulding or coinjection-moulding.

11. Use of multilayer polymer structures according to any one of Claims 1 to 9, for the manufacture of tubes, pipes, cladding, films, sheets, profiles, plaques and hollow bodies.

## Patentansprüche

1. Strukturen mit mehreren Polymerlagen, **dadurch gekennzeichnet, dass** sie eine Lage (A) auf der Basis wenigstens eines Fluorkohlenwasserstoffpolymers umfassen, die an eine Lage (C) auf der Basis wenigstens eines Olefinpolymers über eine Zwischenlage (B) gebunden ist, die 100 bis 10 Gew.% wenigstens eines gepfropften Olefinpolymers und 0 bis 90 Gew.% wenigstens eines Fluorkohlenwasserstoffpolymers enthält, wobei das gepfropfte Olefinpolymer durch Aufpfropfen eines polymerisierbaren Monomers, ausgewählt unter Methylmethacrylat, Ethylacrylat, n-Butylacrylat und Vinylidenfluorid, eines funktionellen Oligomers oder eines funktionellen Telomers auf ein zuvor aktiviertes Olefinpolymer erhalten worden ist.

2. Strukturen mit mehreren Polymerlagen nach Anspruch, **dadurch gekennzeichnet, dass** das gepfropfte Olefinpolymer durch Aufpfropfen eines polymerisierbaren Monomers auf ein zuvor durch Ozonierung aktiviertes Olefinpolymer erhalten wird.

3. Strukturen mit mehreren Polymerlagen nach Anspruch 1, **dadurch gekennzeichnet, dass** das gepfropfte Olefinpolymer durch Aufpfropfen eines polymerisierbaren Monomers auf ein zuvor durch Reaktion mit einem Radikalinitiator aktiviertes Olefinpolymer erhalten wird.

4. Strukturen mit mehreren Polymerlagen nach Anspruch 1, **dadurch gekennzeichnet, dass** das gepfropfte Olefin durch Aufpfropfen eines funktionellen Oligomers oder eines funktionellen Telomers auf ein zuvor durch Funktionalisierung aktiviertes Olefinpolymer erhalten wird.

5. Strukturen mit mehreren Polymerlagen nach Anspruch 4, **dadurch gekennzeichnet, dass** das funktionelle Oligomer unter den funktionellen Oligomeren von Alkylacrylaten, den funktionellen Oligomeren von Alkylmethacrylaten, den funktionellen Oligomeren von Acrylamid, den funktionellen Oligomeren von Methacrylamid und den funktionellen Oligomeren von Fluorvinylmonomeren ausgewählt wird.

6. Strukturen mit mehreren Polymerlagen nach Anspruch 4, **dadurch gekennzeichnet, dass** das funktionelle Telomer unter den funktionellen Telomeren von Alkylacrylaten, den funktionellen Telomeren von Alkylmethacrylaten, den funktionellen Telomeren von Acrylamid, den funktionellen Telomeren von Methacrylamid und den funktionellen Telomeren von Fluorvinylmonomeren ausgewählt wird.

7. Strukturen mit mehreren Polymerlagen nach einem der Ansprüche 1 bis 6, **dadurch gekennzeichnet, dass** das zur Herstellung des gepfropften Olefinpolymers der Lage (B) verwendete Olefinpolymer und das Olefinpolymer der Lage (C) unter den Ethylenhomopolymeren, den Copolymeren von Ethylen mit wenigstens einem anderen, unter Propylen, Buten-1, 4-Methylpenten-1, Hexen-1 und Octen ausgewählten Olefin und unter den Gemischen dieser verschiedenen Ethylenpolymeren ausgewählt werden.

8. Strukturen mit mehreren Polymerlagen nach einem der Ansprüche 1 bis 6, **dadurch gekennzeichnet, dass** das zur Herstellung des gepfropften Olefinpolymers der Lage (B) verwendete Olefinpolymer und das Olefinpolymer der Lage (C) unter den Propylenhomopolymeren, den Copolymeren von Propylen mit wenigstens einem anderen, unter Ethylen, Buten-1, 4-Methylpenten-1, Hexen-1 und Octen-1 ausgewählten Olefin und unter den Gemischen dieser verschiedenen Propylenpolymeren ausgewählt werden.

9. Strukturen mit mehreren Polymerlagen nach einem der Ansprüche 1 bis 8, **dadurch gekennzeichnet, dass** das Fluorkohlenwasserstoffpolymer der Lage (A) und das Halogenkohlenwasserstoffpolymer der Lage (B) ein Vinylidenfluoridpolymer sind.

10. Verfahren zur Herstellung von Strukturen mit mehreren Polymerlagen nach einem der Ansprüche 1 bis 9 durch Colaminierung, Coextrusion, Extrusion-Beschichtung, Beschichtung, Aufinjektion oder Coinjektion.

11. Verwendung der Strukturen mit mehreren Polymerlagen nach einem der Ansprüche 1 bis 9 zur Herstellung von Rohren, Schläuchen, Ummantelungen, Filmen, Folien, Profilen, Platten und Hohlkörpern.
